# EUROPEAN PATENT APPLICATION

(11) **EP 4 760 119 A1**
(43) Date of publication of application: **17.06.2026**
(21) Application number: 24851682.5
(22) Date of filing: 30.07.2024
(51) Int. Cl.: F16C 33/44

(54) **RETAINER AND ROLLING BEARING PROVIDED WITH SAID RETAINER**

(30) Priority: 09.08.2023 JP 2023130334
(71) Applicant: Minebea Mitsumi Inc., Kitasaku-gun, Nagano 3890293 (JP)
(72) Inventor: TOHYAMA, Hirotaka, Kitasaku-gun, Nagano 389-0293 (JP); KOIKE, Takahiro, Kitasaku-gun, Nagano 389-0293 (JP); MATSUDA, Riki, Kitasaku-gun, Nagano 389-0293 (JP)
(74) Representative: Winter, Brandl - Partnerschaft mbB
(86) International application number: PCT/JP2024/027151
(87) International publication number: WO 2025/033257

(57) **Abstract**

[Object] To provide a resin bearing retainer suitable for an operating environment assuming high-speed rotation and to provide a rolling bearing provided with the bearing retainer.

[Solution] Provided are a bearing retainer including a resin and at least two types of different carbon fibers, and a rolling bearing provided with the bearing retainer.

## Description

### Technical Field

The present invention relates to a retainer provided in a rolling bearing, and a rolling bearing provided with the retainer.

### Background Art

Retainers serving to retain rolling elements (balls) in rolling bearings are broadly classified, according to shape, into corrugated retainers formed from press-formed steel plate components, and crown-shaped or machined retainers manufactured by press-forming or machining steel plates, or by resin molding. A resin retainer is used for applications involving high-speed rotation or low noise, and as compared with a metal material, has advantages of being lightweight, being easily molded into complicated shapes, and having high productivity, and accordingly, its application range is expanding.

In recent years, in order to achieve both reduction in size and weight and increase in output in various drive motors for automobiles, cleaners, and the like, motors and bearings are required to rotate at higher speeds, and there is a demand for products for retainers constituting the bearings capable of accommodating higher-speed rotation, for example, products capable of accommodating frictional wear, deformation, and the like associated with high-speed rotation.

As its name indicates, a crown-shaped retainer has an external shape having an annular base part with a plurality of "horns" protruding in an axial direction, and these "horns" are likely to be deformed due to centrifugal force generated by rotation. For example, a crown-shaped retainer formed from a resin composition including carbon fibers has been proposed as a crown-shaped retainer designed to resist deformation even during high-speed rotation of a bearing and to achieve improved ball retaining capability (Patent Document 1).

A machined retainer refers to, for example, a retainer obtained by forming a ball retaining part or the like by machining a molded resin, and is formed from a cylindrical resin molded body, and ball retaining holes penetrating in a radial direction are formed in the cylindrical resin molded body. The machined retainer having such a shape does not have "horns" as in the crown-shaped retainer, and thus is less likely to be deformed by high-speed rotation. For example, in a proposal of a ball bearing intended to address a reduction in strength under a high-temperature and high-humidity environment, adoption of a machined retainer formed of a resin composition including carbon fibers has been proposed (Patent Document 2).

### Patent Literature

Patent Document 1: JP 2020-3070 A
Patent Document 2: JP 6776485 B

### Summary of Invention

### Technical Problem

An object of the present invention is to provide a resin bearing retainer suitable for an operating environment assuming high-speed rotation, and a rolling bearing provided with the bearing retainer.

### Solution to Problem

One aspect of the present invention relates to a bearing retainer including a resin and a fibrous reinforcing material, wherein the fibrous reinforcing material includes at least two types of different carbon fibers.

In addition, the present invention relates to a rolling bearing provided with the bearing retainer.

Further, the present invention relates to a motor provided with the rolling bearing and to a dental handpiece provided with the rolling bearing.

### Brief Description of Drawings

FIG. 1 is a schematic view illustrating an example of a structure of a bearing retainer (a crown-shaped retainer) of the present invention.
FIG. 2 is a schematic view illustrating an example of a structure of a rolling bearing of the present invention.
FIG. 3 is a schematic view illustrating an example of a structure of a motor of the present invention.
FIG. 4 is a schematic view illustrating an example of a structure of a bearing retainer (a machined retainer) of the present invention.
FIG. 5 is a schematic view illustrating an example of a structure of the rolling bearing of the present invention.
FIG. 6 is a schematic view illustrating an example of a dental handpiece of the present invention. In FIG. 6, (A) is an external view of the dental handpiece, and (B) is a schematic view illustrating an enlarged cross-sectional view of a vicinity of a head part of the dental handpiece.
FIG. 7 is a diagram showing results for frictional heat generation [°C] for Examples 1 to 5, 9, and 10 and results for frictional heat generation [°C] for Examples 11 to 13 with respect to the percentage [%] of carbon fiber 1A (PAN-based) in a friction and wear test (load 9.8 N).
FIG. 8 is a diagram showing results for frictional heat generation [°C] for Examples 1 to 5, 9, and 10 and results for frictional heat generation [°C] for Examples 11 to 13 with respect to the percentage [%] of carbon fiber 1A (PAN-based) in a friction and wear test (load 49 N).
FIG. 9 is a diagram showing results for frictional heat generation [°C] for Examples 6 to 8 with respect to the percentage [%] of carbon fiber 1A (PAN-based) in a friction and wear test.
FIG. 10 is a diagram showing results for wear scar width [mm] for Examples 1 to 5 with respect to the percentage [%] of carbon fiber 1A (PAN-based) in a friction and wear test.
FIG. 11 is a diagram showing results (•) for tensile strength [MPa] for Examples 1 to 5 and results (∘) for Examples 6 to 8 with respect to the percentage [%] of carbon fiber 1A (PAN-based) in a tensile test.
FIG. 12 is a diagram showing results for durability life [hrs] for Examples 1 to 5 with respect to the percentage [%] of carbon fiber 1A (PAN-based) in a durability life test.

### Description of Embodiments

As described in the above-mentioned Patent Document 1, proposals have heretofore been made. In the proposals, materials and shapes of retainers have been studied to suppress issues of annular retainers arising from rotation of bearings, for example, deformation due to centrifugal force.

However, when bearings are used in recent higher-speed rotation environments, heat generation caused by high-speed rotation and the further increase in centrifugal force place the retainer provided in the bearing in an environment prone to frictional wear and deformation. In addition, heat generation caused by high-speed rotation may also affect the lubricant performance. Depending on the change in the lubricant performance, the bearing life may be shortened.

Note that, although the above-described machined retainer is considered to be more resistant to deformation caused by high-speed rotation than the crown-shaped retainer, the machined retainer is inevitably affected by centrifugal force depending on the rotational speed, and has a problem of frictional wear or the like because the machined retainer is a sliding member, as in the crown-shaped retainer.

As described above, in either case of the crown-shaped retainer or the machined retainer, the rolling bearing provided with the retainer is required to have durability at high-speed rotation.

While studying the challenge of providing a retainer suitable for high-speed rotation, the present inventors have focused on the fact that, when heat is generated by high-speed rotation of a bearing, deformation itself is unavoidable even if a material is hardly deformed by heat. Furthermore, as described above, it is considered that the heat generation also affects the lubricant. Therefore, in advancing the study of the retainer from the viewpoint of suppressing the heat generation itself, the present inventors have found for the first time that the frictional heat generation is specifically suppressed by adopting a bearing retainer having two types of different carbon fibers, and further two types of carbon fibers having different thicknesses and lengths, and durability life of the bearing is improved by adopting such a retainer in the rolling bearing.

Note that it is generally known that a reinforcing material such as carbon fiber can impart specific properties to a matrix resin depending on the type and amount thereof. Therefore, it is expected that the heat generation of the bearing retainer is further suppressed by blending pitch-based carbon fibers, regarded as having high heat transfer performance. However, as shown in the results for Examples described below, the frictional heat generation temperature was certainly suppressed by the presence of the pitch-based carbon fibers, but when the percentage of the pitch-based carbon fibers was increased and only the pitch-based carbon fibers were used, the frictional heat generation temperature was rather high. The present inventors have found that the effect of suppressing heat generation cannot be obtained by merely blending carbon fibers considered to be capable of imparting characteristics, and heat generation can be suppressed for the first time by the presence of two types of different carbon fibers, and have completed the present invention.

Hereinafter, this will be described in detail.

### Bearing Retainer

A bearing retainer according to the present invention includes a resin and a fibrous reinforcing material. Hereinafter, each component constituting the bearing retainer will be described in detail.

### Fibrous Reinforcing Material

The fibrous reinforcing material used in the present invention includes at least two types of different carbon fibers, and examples of the carbon fibers include PAN-based carbon fibers, pitch-based carbon fibers, and rayon-based carbon fibers, depending on the raw material.

In the present invention, as the at least two types of different carbon fibers, PAN-based carbon fibers made from polyacrylonitrile as a raw material and pitch-based carbon fibers made from a by-product (pitch) of coal, petroleum or coal tar as a raw material may be adopted.

The pitch-based carbon fiber is classified into an isotropic pitch-based carbon fiber exhibiting optical isotropy (not exhibiting polarization) and an anisotropic pitch-based carbon fiber exhibiting optical anisotropy according to the modification of the raw material pitch or the heat treatment process, and the isotropic pitch-based carbon fiber may be adopted in the present invention.

A content ratio of the pitch-based carbon fibers and the PAN-based carbon fibers in the bearing retainer of the present invention may be, in terms of mass ratio, pitch-based carbon fibers: PAN-based carbon fibers = 1:5 to 5:1, and may be, for example, 1:4 to 4:1, or 1:3 to 3:1.

In the bearing retainer (product) of the present invention, the average fiber diameters and the average fiber lengths of the pitch-based carbon fibers and the PAN-based carbon fibers may be particularly appropriately selected, but in one embodiment, the pitch-based carbon fibers may have a larger (thicker) average fiber diameter, as compared with the PAN-based carbon fibers, and in one embodiment, the pitch-based carbon fibers may have a shorter average fiber length, as compared with the PAN-based carbon fibers.

In addition, in the bearing retainer (product) of the present invention, an interquartile range of the fiber length of the PAN-based carbon fibers (75% fiber length-25% fiber length) may be 90 µm or more, for example, 90 µm or more and 200 µm or less, and an interquartile range of the fiber length of the pitch-based carbon fibers (75% fiber length-25% fiber length) may be 40 µm or less, for example, 10 µm or more and 40 µm or less.

The average fiber length of the PAN-based carbon fibers may be, for example, 90 µm to 180 µm, or may be, for example, 100 µm to 180 µm, or may be, for example, 110 µm to 170 µm. In addition, the average fiber diameter of the PAN-based carbon fibers may be, for example, 5 µm to 10 µm or 7 µm to 8 µm.

The average fiber length of the pitch-based carbon fibers may be, for example, 35 µm to 55 µm, or may be, for example, 40 µm to 50 µm. In addition, the average fiber diameter of the pitch-based carbon fibers may be, for example, 12 µm to 18 µm or 14 µm to 16 µm.

In the present invention, the "average fiber diameter" and the "average fiber length" of the pitch-based carbon fibers and the PAN-based carbon fibers, and the "interquartile range" calculated from the "75% fiber length" and the "25% fiber length" are values obtained by two dimensional image analysis of the residue (fibrous reinforcing material:carbon fibers) after the resin component of the bearing retainer is removed by heat treatment (note that it has been confirmed that the pitch-based carbon fibers and the PAN-based carbon fibers are not modified by the heat treatment operation of the resin component).

Specifically, the residue is subjected to image analysis, and the fiber diameter is classified into sections at intervals of 1 µm to create a frequency distribution, and the fiber length is classified into sections at intervals of 10 µm to create a frequency distribution (see below). In this case, it is considered that the fiber diameter of the carbon fibers does not vary by a melt-mixing operation with the resin. In fact, in the examples described below, it has been confirmed that the frequency distribution of the fiber diameter when the pitch-based carbon fibers and the PAN-based carbon fibers are mixed is a frequency distribution obtained by superimposing the frequency distribution of only the pitch-based carbon fibers and the frequency distribution of only the PAN-based carbon fibers according to a blending ratio (the frequency belonging to each class (fiber diameter) increases or decreases according to the blending ratio). In the examples described below, the average values of the fiber diameter and the fiber length are calculated for each classification of the carbon fibers. In addition, a frequency distribution of the fiber length is created for each classification of the carbon fibers, quartiles are obtained from the frequency distribution, and an interquartile range (75% fiber length (third quartile) - 25% fiber length (first quartile)) is determined.

In the bearing retainer of the present invention, the fibrous reinforcing material such as carbon fibers (pitch-based carbon fibers and PAN-based carbon fibers) may be contained in a total amount of 10 to 35 parts by mass based on 100 parts by mass of the bearing retainer.

### Resin

As the resin constituting the bearing retainer of the present invention, a polyamide-based resin having excellent heat resistance may be selected.

Among them, semi-aromatic polyamide whose heat resistance and the like are improved by partially introducing aromatic components, polyamide 46 (PA46) whose heat resistance is improved by increasing the concentration of amide groups, and the like may be used.

The semi-aromatic polyamide refers to a polyamide having an aromatic component in a dicarboxylic acid component or a diamine component constituting the polyamide, and examples thereof include polynonamethylene terephthalamide (also referred to as polyamide 9T or PA9T) having nonanediamine and terephtalic acid as main components, polyhexamethylene terephthalamide (polyamide 6T, PA6T) having hexamethylenediamine and terephtalic acid as main components, and polydecamethylene terephthalamide (polyamide 10T, PA10T) having decanediamine and terephtalic acid as main components.

In addition, the resin may contain a thermoplastic elastomer or the like in addition to the polyamide-based resin. Examples of such thermoplastic elastomers include acid-modified polyolefin-based thermoplastic elastomers.

### Other Components

The bearing retainer of the present invention may contain, in addition to the resin and the fibrous reinforcing material (carbon fiber), various known additives as long as the effects of the present invention are not impaired.

The bearing retainer may be manufactured by injection molding a resin mixture including the resin and the fibrous reinforcing material. For example, the resin and the fibrous reinforcing material (and various additives as desired) are melt-kneaded using a twin-screw extruder to obtain a resin mixture, and the resin mixture is injection-molded into a bearing retainer having a desired shape and size.

In addition, as another method for manufacturing the bearing retainer, a bearing retainer having a desired shape and size may be obtained by molding a molded body of a resin mixture including the resin and the fibrous reinforcing material by machining such as cutting.

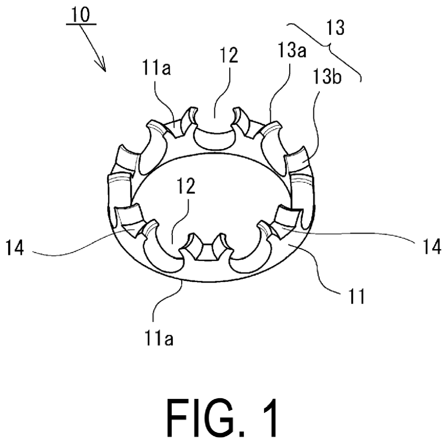

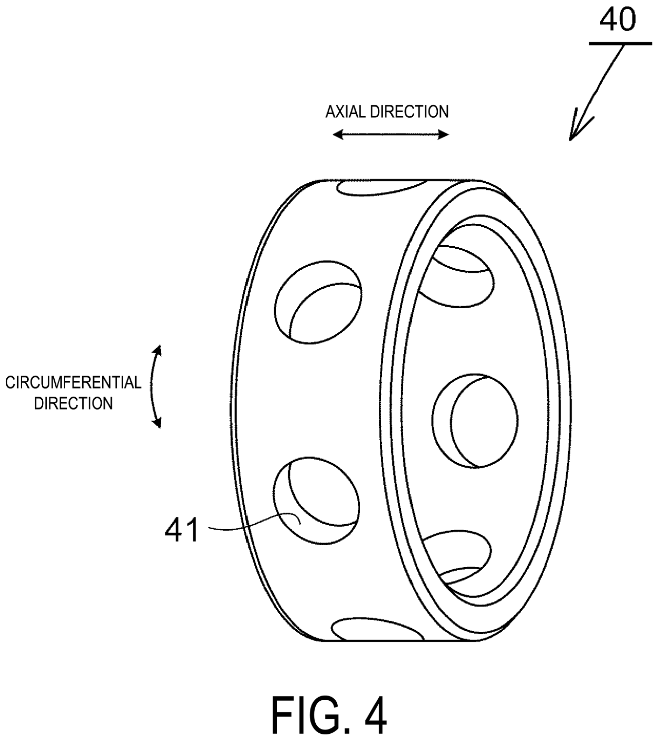

An example of the structure of the bearing retainer according to the present invention is illustrated in FIGS. 1 and 4, but the present invention is not limited to the following embodiment.

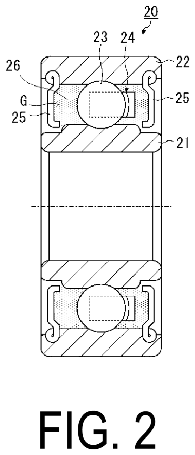

As illustrated in FIG. 1, a crown-shaped retainer 10 as one aspect of the bearing retainer, includes a cylindrical annular member 11 centered on a central axis (rotation axis) of a rolling bearing 20 (not illustrated) described below. The annular member 11 has an outer peripheral surface, an inner peripheral surface, and two end surfaces 11a connecting the outer peripheral surface and the outer peripheral surface. A plurality of ball pockets (recesses) 12 rotatably accommodating balls (rolling elements 23 in FIG. 2 described below; not illustrated) are formed at predetermined intervals along a circumferential direction in one end surface 11a of the annular member 11. Further, the annular member 11 includes a pair of claws 13 (13a and 13b) extending from the one end surface 11a at both end parts of each ball pocket 12. The pair of claws 13 is curved toward each other so as to follow a curved surface of the ball located in each ball pocket 12, thereby preventing falling out of the ball accommodated in each ball pocket 12. In addition, the presence of the claws 13 allows a grease pocket 14 to be formed between the two ball pockets 12. The grease pockets 14 can accommodate a grease composition G (not illustrated), and the composition contributes to lubrication between the ball pockets 12 and the balls (rolling elements 23 in FIG. 2 described below) accommodated in the ball pockets.

In addition, as illustrated in FIG. 4, a machined retainer 64, as another aspect of the bearing retainer, is a cylindrical molded body centered on a central axis (rotation axis) A of a rolling bearing 50 (not illustrated) described below, and a plurality of pockets (ball retaining holes) 41 for retaining balls (rolling elements (not illustrated)) in a freely rollable manner are formed at predetermined intervals along a circumferential direction so as to penetrate in a radial direction.

### Rolling Bearing

A preferred embodiment of the rolling bearing according to the present invention will be described in detail with reference to the accompanying drawings. Note that the present invention is not limited to the embodiments described below.

FIG. 2 is a radial cross-sectional view illustrating a rolling bearing 20 according to a preferred embodiment of the present invention. The rolling bearing 20 has a basic structure similar to a rolling bearing of the related art, and includes an annular inner ring 21, an outer ring 22, a plurality of rolling elements 23, a retainer 24, and a seal member 25.

The inner ring 21 is a cylindrical structure installed coaxially with a central axis at an outer peripheral side of a shaft (not illustrated). The outer ring 22 is a cylindrical structure disposed coaxially with the inner ring 21 at an outer peripheral side of the inner ring 21. Each of the plurality of rolling elements 23 is a ball disposed in a raceway within an annular bearing space 26 formed between the inner ring 21 and the outer ring 22. That is, the rolling bearing 20 in the present embodiment is a ball bearing.

In one embodiment of the rolling bearing of the present invention, the above-described crown-shaped retainer (see FIG. 1) including a resin and a fibrous reinforcing material is used as the retainer 24. The retainer 24 is disposed in the raceway to retain the plurality of rolling elements 23. First, as described above with reference to FIG. 1, the retainer 24 is an annular body installed coaxially with the central axis of the shaft, and has a structure. In the structure, the retainer includes, at one side in a direction of the central axis, a plurality of pocket parts (the ball pockets 12 in FIG. 1) for retaining the rolling elements 23, and the rolling elements 23 are accommodated in the respective pocket parts.

The seal member 25 is fixed to an inner peripheral surface of the outer ring 22, extends toward the inner ring 21, and seals the bearing space 26. A grease composition G is typically filled in the bearing space 26 sealed by the seal member 25. That is, the grease composition G is held between the inner ring 21 and the outer ring 22. Note that the amount of the grease G filled in the bearing space 26 may range, for example, from 5% to 50% of the volume of the bearing space.

The seal member 25 is formed of, for example, a steel plate or rubber, and examples of the steel plate or rubber include a steel plate shield not in contact with an outer periphery of the inner ring 21, and a non-contact type rubber seal not in contact with the outer periphery of the inner ring 21. In the present invention, either of the seal members, the steel plate shield or the non-contact type rubber seal, can be used. Note that the drawing illustrates an aspect including the seal member 25, but the present invention also includes an aspect with a rolling bearing including no seal member.

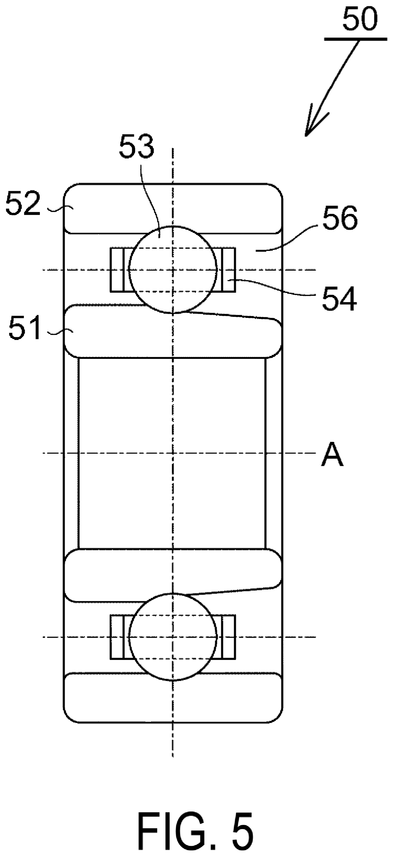

Another embodiment of the rolling bearing of the present invention is illustrated in FIG. 5. FIG. 5 is a radial cross-sectional view illustrating a rolling bearing 50 according to a preferred embodiment of the present invention. Like the rolling bearing 20 illustrated in FIG. 2 described above, the rolling bearing 50 has a basic structure similar to a rolling bearing of the related art, and includes an annular inner ring 51, an outer ring 52, a plurality of rolling elements 53, and a retainer 54, and an annular bearing space 56 is formed between the inner ring 51 and the outer ring 52. The inner ring 51, the outer ring 52, the rolling elements 53, and the bearing space 56 have the same configurations as the configurations of the inner ring 21, the outer ring 22, the rolling elements 23, and the bearing space 26 in the aspect of the rolling bearing 20 illustrated in FIG. 2 described above. Note that, although the aspect of FIG. 5 is an aspect without a seal member, an aspect with a seal member may also be adopted as in the aspect of the rolling bearing 20 illustrated in FIG. 2. In another embodiment of the rolling bearing of the present invention illustrated in FIG. 5, the above-described cylindrical machined retainer (see FIG. 4) including a resin and a fibrous reinforcing material is used as the retainer 54. The retainer 54 is disposed in the raceway to retain the plurality of rolling elements 53. First, as described above with reference to FIG. 4, the retainer 54 is an annular body installed coaxially with the central axis of the shaft, and has a structure. In the structure, the retainer includes a plurality of pocket parts (the pockets 41 in FIG. 4) for rotatably retaining the rolling elements 53 at intervals in a circumferential direction, and the rolling elements 53 are accommodated in the respective pocket parts.

The rolling bearing including the crown-shaped retainer according to one embodiment of the present invention and the rolling bearing including the machined retainer according to another embodiment of the present invention are not particularly limited in size, use conditions, and the like.

The rolling bearing according to the present invention can be used as a rolling bearing of a bearing device used in a motor (for example, a fan motor or a cleaner motor) used in automobiles, home appliances, information devices, and the like, as well as in a dental handpiece and the like.

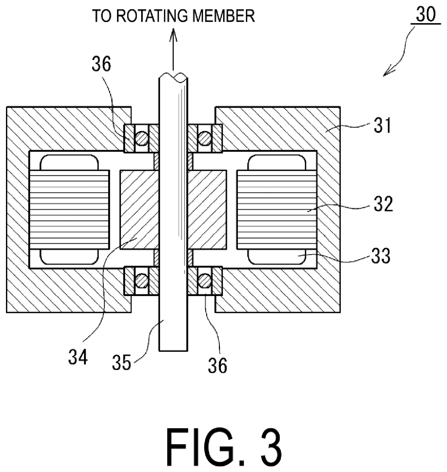

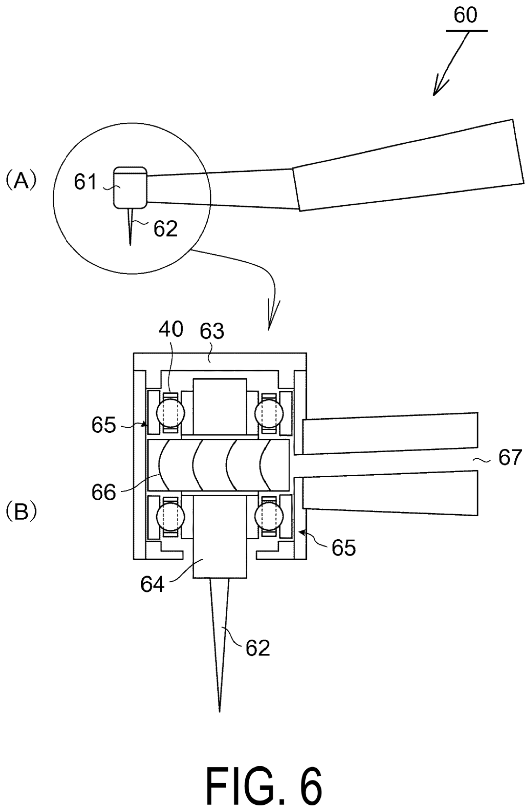

As an example, an embodiment of a motor including the rolling bearing of the present embodiment will be described in detail with reference to FIG. 3, and an embodiment of a dental handpiece including the rolling bearing of the present embodiment will be described in detail with reference to FIG. 6, but the present invention is not limited by the following embodiments.

### Motor

FIG. 3 is a shaft-direction cross-sectional view of a motor according to one embodiment of the present invention. A motor 30 has a basic structure similar to a motor of the related art, and includes a housing 31, a stator 32, a coil 33, a rotor magnet 34, a shaft 35, and rolling bearings 36 supporting the shaft 35. As the rolling bearing 36 used here, the rolling bearing (FIG. 2) provided with the above-described crown-shaped retainer (FIG. 1) may be used.

The motor 30 generates a magnetic force by causing a current supplied from a power supply (not illustrated) via a drive circuit to flow through the coil 33 wound around the stator 32, thereby rotating the rotor magnet 34 and transmitting the rotation to an external rotating member through the shaft 35.

### Dental Handpiece

A dental handpiece (also referred to as a dentistry handpiece) refers to an instrument used for cutting teeth in dental treatment, and is an instrument with a drill rotating at an ultra-high speed of 400,000 to 500,000 revolutions per minute so as to smoothly cut hard teeth.

In FIG. 6, (A) is an external view of a dental handpiece of one embodiment of the present invention, and (B) is an enlarged cross-sectional view of a vicinity of a head part of the dental handpiece. As illustrated in FIG. 6(A), a dental handpiece 60 includes a head part 61 including a rotation mechanism, and a tool 62 detachably attached to the head part 61. When using the dental handpiece 60, the tool 62 is rotated at high speed (for example, 400,000 revolutions per minute or more) to cut teeth, or the like.

As illustrated in FIG. 6(B), the head part 61 of the dental handpiece 60 includes, in a housing 63, a shaft member 64, a pair of rolling bearings 65, a turbine blade 66, and an air supply port 67 together with the tool 62. The tool 62 is mounted to the shaft member 64, and the shaft member 64 is rotatably supported by the housing 63 via the pair of upper and lower rolling bearings 65 present in the axial direction. Further, the turbine blade 66 is attached to the shaft member 64 between the pair of rolling bearings 65. When compressed air is supplied from the air supply port 67 to the turbine blade 66, the turbine blade 66 rotates at high speed. Accordingly, the shaft member 64 and the tool 62 can also be rotated at high speed. Note that the dental handpiece is not limited to the structure enabling high-speed rotation of the turbine blade 66 by compressed air, and may have a structure enabling high-speed rotation of the shaft member 64 via an electric motor (the same structure as the motor described above).

As the rolling bearing 65 used here, the rolling bearing (FIG. 5) provided with the above-described machined retainer (FIG. 4) may be used. In the head part 61 of the dental handpiece 60, an outer ring (62 in FIG. 5) of the rolling bearing 65 is fitted in the housing 63, and an inner ring (61 in FIG. 5) is fitted on the shaft member 64. In the rolling bearing 65, the inner ring and the outer ring are rotatable relative to each other about the rotation axis A (see FIG. 5). That is, when using the dental handpiece 60, the inner ring rotates at high speed relative to the outer ring.

The present invention is not limited to the embodiments and specific examples described in the present specification, and various changes and variations can be made within the scope of the technical idea described in the claims.

### Examples

The present invention is described below in more detail with reference to examples. However, the present invention is not limited to the examples.

Details of the test materials evaluated in the following examples are as follows.

### Resin

- PA9T: Genestar (trade name) N1001A - M41, manufactured by Kuraray Co., Ltd.
- PA46: Stanyl (trade name) TW341, manufactured by DSM

### Carbon Fiber

- Carbon fiber 1A (PAN-based carbon fiber): Tenax (trade name) - J HT C702 6MM, manufactured by Teijin Limited (fiber length: 6 mm)
- Carbon fiber 1B (PAN-based carbon fiber): Tenax (trade name) - J HT M100 (fiber length: 40 µm)
- Carbon fiber 2A (pitch-based isotropic carbon fiber): Donacarbo (trade name) Milled S2404N, manufactured by Osaka Gas Chemicals Co., Ltd. (fiber length: 40 µm, fiber diameter: 13 µm)
- Carbon fiber 2B (pitch-based isotropic carbon fiber): Donacarbo (trade name) Milled S-246, manufactured by Osaka Gas Chemicals Co., Ltd. (fiber length: 1 mm, fiber diameter: 13 µm)

Note: The fiber length of the carbon fiber described above is the average fiber length (manufacturer's nominal value) of the test material itself (before mixing with the resin), and does not indicate the fiber length after melt-kneading with the resin and molding.

### Preparation of Resin Mixture (Test Material)

Resin mixtures of Example 1 to Example 13 were prepared according to the resin types and carbon fiber types, and the blending ratios (mass ratios) of the carbon fibers shown in Table 1 (Tables 1-1 to 1-3) below. Note that, in each case, the mixing was performed such that the carbon fibers (total amount) were 20 parts by mass with respect to 80 parts by mass of the resin.

Specifically, the resins (pellets) shown in Table 1 and a predetermined amount of carbon fiber 2A or carbon fiber 1B were charged into a twin-screw kneading extruder and melt-kneaded, and then a predetermined amount of carbon fiber 1A or carbon fiber 2B was charged thereinto and further melt-kneaded to obtain a pelletized resin mixture. Note that in Example 10, carbon fiber 2B was first added to the resins and melt-kneaded, and then carbon fiber 1A was added and melt-kneaded to obtain a pelletized resin mixture, and in Example 13, carbon fiber 1B was first added to the resins and melt-kneaded, and then carbon fiber 2A was added and melt-kneaded to obtain a pelletized resin mixture.

**Table 1**

| [Table 1-1] | | | | | |
|---|---|---|---|---|---|
| Resin: PA9T | Example 1 | Example 2 | Example 3 | Example 4 | Example 5 |
| Carbon fiber 1A (PAN-based) | 100 | 75 | 50 | 25 | 0 |
| Carbon fiber 2A (pitch-based) | 0 | 25 | 50 | 75 | 100 |

**[Table 1-2]**

| Resin: PA46 | Example 6 | Example 7 | Example 8 |
|---|---|---|---|
| Carbon fiber 1A (PAN-based) | 100 | 50 | 0 |
| Carbon fiber 2A (pitch-based) | 0 | 50 | 100 |

**[Table 1-3]**

| Resin: PA9T | Example 9 | Example 10 | Example 11 | Example 12 | Example 13 | Example 3 (reproduced) |
|---|---|---|---|---|---|---|
| Carbon fiber 1A (PAN-based) | 50 | 50 | | | | 50 |
| Carbon fiber 1B (PAN-based) | 50 | | 50 | | 50 | |
| Carbon fiber 2A (pitch-based) | | | | 50 | 50 | 50 |
| Carbon fiber 2B (pitch-based) | | 50 | 50 | 50 | | |

| | | | | | | |
|---|---|---|---|---|---|---|
| *The numerical values in Tables 1-1 to 1-3 represent mass ratios | | | | | | |

The resin mixture (test material) of each example was molded into a shape (a disk-shaped, dumbbell-shaped, or crown-shaped retainer) suitable for various tests described below, and used for various evaluations.

In the following description, the example number of the resin mixture shown in Table 1 is also treated as the example number of each test sample (disk, dumbbell test piece, crown-shaped retainer) and the example number of each test evaluation.

### Analysis of Carbon Fibers in Crown-Shaped Retainer

The resin component of the crown-shaped retainer of each of Examples 1 to 8 was removed by heat treatment (at 600°C for 1 hour in a nitrogen atmosphere). The carbon fibers as the residue after the heat treatment were subjected to image analysis, the fiber diameter was classified into sections at intervals of 1 µm, the fiber length was classified into sections at intervals of 10 µm, and frequency distributions were created for the respective sections. Note that, in the combination of carbon fiber 1A and carbon fiber 2A, fibers having a fiber diameter of 10 µm or more (thick fibers) were assigned to carbon fiber 2A (pitch-based carbon fibers), and fibers having a fiber diameter of less than 10 µm (thin fibers) were assigned to carbon fiber 1A (PAN-based carbon fibers), and an average value of the fiber diameter or the fiber length was obtained based on each assignment.

The results obtained for Examples 1 to 5 are shown in Tables 2 to 4.

**Table 2**

| [Table 2] Average Fiber Diameter | | | | | |
|---|---|---|---|---|---|
| [µm] | PA9T | | | | |
| | Example 1 | Example 2 | Example 3 | Example 4 | Example 5 |
| Carbon fiber 1A (PAN-based) | 7.5 | 7.4 | 7.4 | 7.5 | - |
| Carbon fiber 2A (pitch-based) | - | 15.1 | 15.3 | 15.2 | 15.4 |

**Table 3**

| [Table 3] Average Fiber Length | | | | | |
|---|---|---|---|---|---|
| [µm] | PA9T | | | | |
| | Example 1 | Example 2 | Example 3 | Example 4 | Example 5 |
| Carbon fiber 1A (PAN-based) | 150.9 | 136.7 | 162.7 | 138.2 | - |
| Carbon fiber 2A (pitch-based) | - | 47.8 | 51.1 | 50.1 | 55.2 |

**[Table 4]**

| [Table 4] Fiber lengths of carbon fiber 1A and carbon fiber 2A in crown-shaped retainers of Examples 1 to 5 (PA9T) | | | | | |
|---|---|---|---|---|---|
| Carbon fiber 1A (PAN-based) | Fiber length [µm] | | | | |
| | Example 1 | Example 2 | Example 3 | Example 4 | Example 5 |
| Q2 | 147.15 | 127.3 | 156.6 | 123.2 | 40.35 |
| Interquartile range | 105.95 | 118 | 131.425 | 122.65 | -(6.95)*1 |

| | | | | | |
|---|---|---|---|---|---|
| *1: The numerical values in parentheses indicate values for fibers misidentified as PAN-based fibers based on the fiber length | | | | | |

| Carbon fiber 2A (pitch-based) | Fiber length [µm] | | | | |
|---|---|---|---|---|---|
| | Example 1 | Example 2 | Example 3 | Example 4 | Example 5 |
| Q2 | 167.8 | 45.75 | 42.7 | 42.3 | 46 |
| Interquartile range | -(117.4)*2 | 26.65 | 28.05 | 27.5 | 31.7 |

| | | | | | |
|---|---|---|---|---|---|
| *2: The numerical values in parentheses indicate values for fibers misidentified as pitch-based fibers based on the fiber diameter | | | | | |

### Various Evaluations

### (1) Friction and Wear Test

A friction and wear test was conducted in a ball-on-disk manner using a friction and wear tester (UMT TriboLab, manufactured by Bruker Corporation), and the frictional heat generation and frictional wear of the samples were evaluated.

The test was conducted using, as disks, test plates machined from the resin mixtures of Examples 1 to 13 (length: 30 mm; width: 10 mm; thickness: 4 mm), and balls (material: SUJ2; φ 24 mm). The test conditions were set as follows: two load conditions: 9.8 N or 49 N, measurement temperature: room temperature (25°C ± 5°C), stroke distance: 12.5 mm (25 mm per cycle), frequency: 20 Hz (sliding speed: 0.5 m/s), and test time: 2 minutes (total sliding distance: 60 m).

After completion of the test, the sizes of the wear scar widths at the ball sides of Examples 1 to 5 were measured (average value when N = 3). In addition, during the test, the ball temperatures of Examples 1 to 13 were measured by a thermocouple attached to the test apparatus, and the temperature at the maximum value was evaluated as the frictional heat generation (°C).

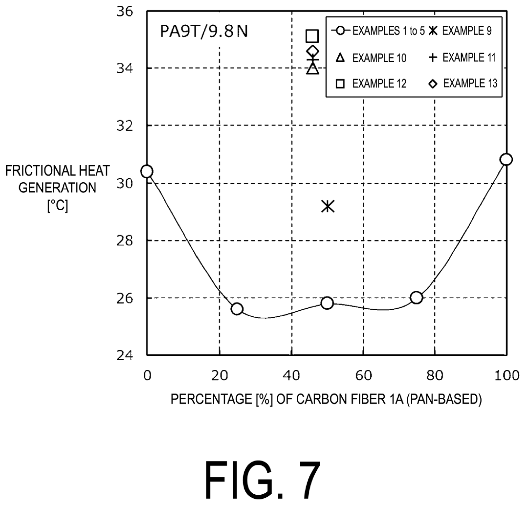

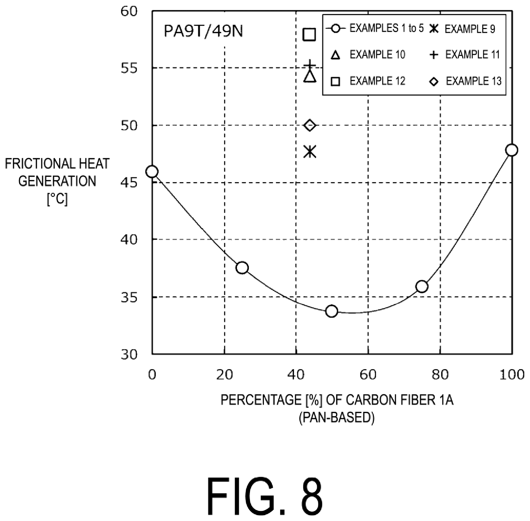

FIG. 7 shows results for frictional heat generation [°C] for Examples 1 to 5, 9, and 10 (resins: PA9T, load: 9.8 N) with respect to the percentage [%] of carbon fiber 1A (PAN-based), and FIG. 8 shows results for frictional heat generation [°C] for Examples 1 to 5, 9, and 10 (resins: PA9T, load: 49 N) with respect to the percentage [%] of carbon fiber 1A (PAN-based). Note that the results for frictional heat generation for Examples 11 to 13 not containing carbon fiber 1A (PAN-based) are also shown in each of FIG. 7 (load: 9.8 N) and FIG. 8 (load: 49 N), aligned on the axis corresponding to 50% on the horizontal axis representing the percentage of carbon fiber 1A (PAN-based), as control examples such as Example 3 containing two types of carbon fibers at a mass ratio of 50/50. In addition, in FIGS. 7 and 8, the results for Examples 1 to 5 are indicated by open circles (∘), the result for Example 9 is indicated by an asterisk (*), the result for Example 10 is indicated by an open triangle (Δ), the result for Example 11 is indicated by a cross (+), the result for Example 12 is indicated by an open square (□), and the result for Example 13 is indicated by an open rhombus (0).

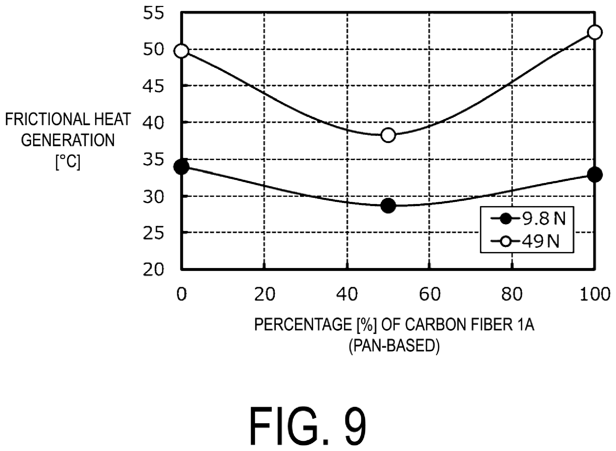

In addition, FIG. 9 shows results for frictional heat generation [°C] in Examples 6 to 8 (resins: PA46) with respect to the percentage [%] of carbon fiber 1A (PAN-based). In FIG. 9, the results for Examples 6 to 8 under a load of 9.8 N are indicated by solid circles (•), and the results under a load of 49 N are indicated by open circles (∘).

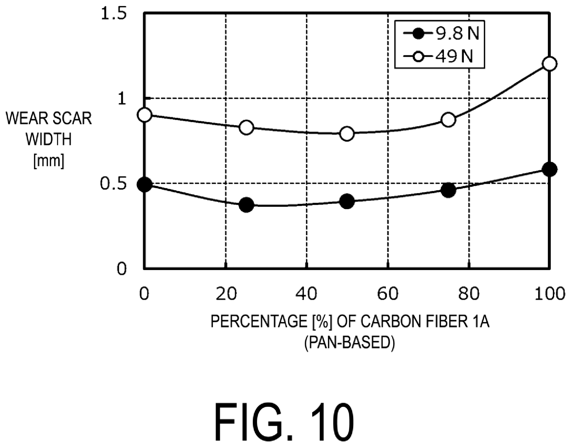

Further, FIG. 10 shows results for wear scar width [mm] for Examples 1 to 5 (resins: PA9T) with respect to the percentage [%] of carbon fiber 1A (PAN-based). In FIG. 10, the results for Examples 1 to 5 under a load of 9.8 N are indicated by solid circles (•), and the results under a load of 49 N are indicated by open circles (∘).

In addition, in FIGS. 7, 8, and 10, the results for Examples 5 to 1 are shown in order from those having a smaller percentage of carbon fiber 1A (PAN-based), and the results in FIG. 9 show the results for Examples 8 to 6 in order from those having a smaller percentage of carbon fiber 1A (PAN-based).

### (2) Tensile Test

A tensile test was conducted using a tensile-compression tester (TG-10 kN, manufactured by Minebea Mitsumi Inc.) to evaluate the tensile strength (tensile fracture stress) of the samples.

The resin mixtures of Examples 1 to 8 were processed in accordance with the JIS K 7139 dumbbell-shaped tensile test specimen Type 1A standard to prepare dumbbell test specimens for each Example.

In accordance with JIS K 7161, at a measurement temperature of room temperature (25°C ± 5°C), the dumbbell test specimens of each Example were stretched with a grip-to-grip distance of 115 mm and a tensile speed of 5 mm/min, and the tensile strength (tensile fracture stress) (MPa) was measured (average value when N = 3).

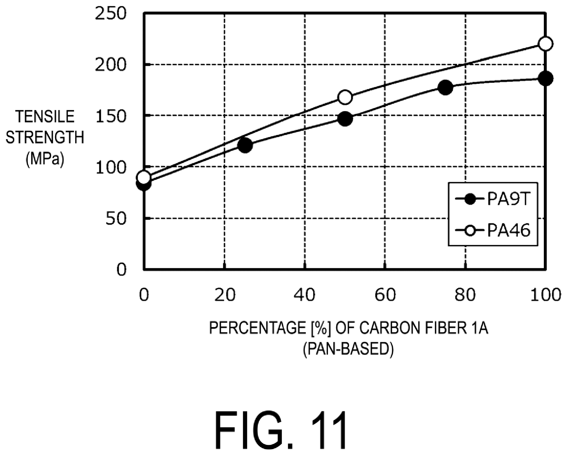

In FIG. 11, the results for tensile strength [MPa] for Examples 1 to 5 (resins: PA9T) with respect to the percentage [%] of carbon fiber 1A (PAN-based) are indicated by solid circles (•), and the results for Examples 6 to 8 (resins: PAN46) are indicated by open circles (∘). In addition, the results in FIG. 11 show the results for Examples 5 to 1 (•) and Examples 8 to 6 (∘) in order from those having a smaller percentage of carbon fiber 1A (PAN-based).

### (3) Durability Life Test

The ball bearing (inner diameter: 5 mm, outer diameter: 13 mm, width: 4 mm) including the crown-shaped retainer made of each resin mixture of Examples 1 to 5 was set in a housing, and a preload of 2.5 N was applied to the outer ring of the ball bearing in the axial direction. Then, a shaft was inserted into the inner diameter of the ball bearing, and was connected to a rotation axis of a test motor such that the ball bearing rotated on the inner ring.

Then, at a test temperature of room temperature (25°C ± 5°C), the ball bearing was rotated at a rotational speed of 170,000 rpm, and the time until the ball bearing stopped was measured.

As a stop condition, a time point when the torque increased and the rotation speed reached a value lower by 10% from the specified value was regarded as stop, and the test time until the stop was defined as durability life (hrs). The ball bearing including the crown-shaped retainer of each example was tested three times, and the durability life was determined as an average value.

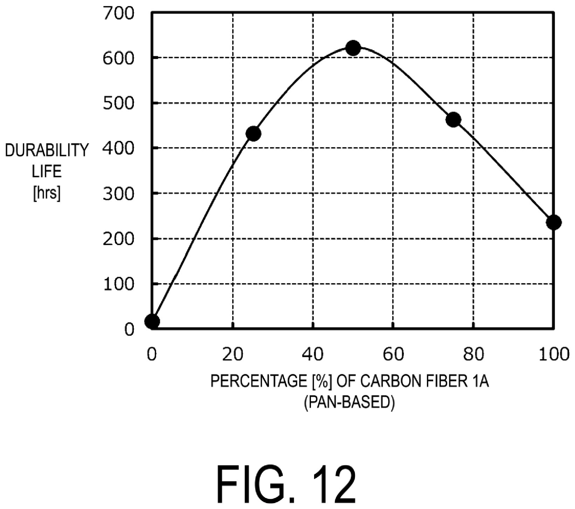

FIG. 12 shows results for durability life [hrs] for Examples 1 to 5 (resins: PA9T) with respect to the percentage [%] of carbon fiber 1A (PAN-based). In addition, the results in FIG. 12 show the results for Examples 5 to 1 in order from those having a smaller percentage of carbon fiber 1A (PAN-based).

### Evaluation Results

As shown in FIGS. 7 to 10, the results were obtained indicating suppression of the frictional heat generation (FIGS. 7 to 9) and the frictional wear (FIG. 10) by blending elongated carbon fiber 1A (PAN-based) and thick and short carbon fiber 2A (pitch-based) (Examples 2 to 4 and 7). Note that, as shown in FIGS. 7 and 8, in Example 9 obtained by blinding elongated carbon fiber 1A (PAN-based) and thin and short carbon fiber 1B (PAN-based), Example 10 obtained by blinding elongated carbon fiber 1A (PAN-based) and thick and long carbon fiber 2B (pitch-based), Example 11 obtained by blinding thin and short carbon fiber 1B (PAN-based) and thick and long carbon fiber 2B (pitch-based), Example 12 obtained by blinding thick and short carbon fiber 2A (pitch-based) and thick and long carbon fiber 2B (pitch-based), and Example 13 obtained by blinding thin and short carbon fiber 1B (PAN-based) and thick and short carbon fiber 2A (pitch-based), the results were obtained indicating that the suppression of the frictional heat generation observed in the combination of elongated carbon fiber 1A (PAN-based) and thick and short carbon fiber 2A (pitch-based) (Examples 2 to 4) was not achieved.

On the other hand, as shown in FIG. 11, with regard to the tensile strength (tensile fracture stress), as the percentage of elongated carbon fiber 1A (PAN type) increases, the strength tends to increase.

In addition, as shown in FIG. 12, the durability life of the bearing was prolonged by blending elongated carbon fiber 1A (PAN-based) and the thick and short carbon fiber 2A (pitch-based), as in the case of the frictional heat generation and the frictional wear.

As described above, there was no correlation between the increase in tensile strength and the suppression of heat generation. In addition, as described above, it was confirmed that the pitch-based carbon fiber alone, regarded as having high heat transfer performance, cannot provide the effect of suppressing heat generation, and the presence of two types of carbon fiber suppresses frictional heat generation and wear friction for the first time, and improves the durability life of the bearing.

The best embodiments have been described in detail above, but the present invention is not limited to the embodiments described above, and variations, modifications, and the like within a range achieving the object of the present invention are included in the present invention.

### Reference Signs List

10 Crown-shaped retainer, 11 Annular member, 11a End surface, 12 Ball pocket (recess), 13 (13a and 13b) Claw, 14 Grease pocket,
20 Rolling bearing, 21 Inner ring, 22 Outer ring, 23 Rolling element, 24 Retainer, 25 Seal member, 26 Bearing space,
30 Motor, 31 Housing, 32 Stator, 33 Coil, 34 Rotor magnet, 35 Shaft, 36 Rolling bearing,
40 Machined retainer, 41 Pocket (ball retaining hole),
50 Rolling bearing, 51 Inner ring, 52 Outer ring, 53 Rolling element, 54 Retainer, 56 Bearing space,
60 Dental handpiece, 61 Head part, 62 Tool, 63 Housing, 64 Shaft member, 65 Rolling bearing, 66 Turbine blade, 67 Air supply port

## Claims

1. A bearing retainer comprising:
a resin; and
a fibrous reinforcing material, wherein
the fibrous reinforcing material includes at least two types of different carbon fibers.

2. The bearing retainer according to claim 1, wherein the at least two types of different carbon fibers include PAN-based carbon fibers and pitch-based carbon fibers.

3. The bearing retainer according to claim 2, wherein the pitch-based carbon fibers included in the bearing retainer have an average fiber diameter larger than an average fiber diameter of the PAN-based carbon fibers.

4. The bearing retainer according to claim 2, wherein the pitch-based carbon fibers included in the bearing retainer have an average fiber length smaller than an average fiber length of the PAN-based carbon fibers.

5. The bearing retainer according to claim 2, wherein the pitch-based carbon fibers are isotropic pitch-based carbon fibers.

6. The bearing retainer according to claim 2, wherein
an interquartile range (75% fiber length-25% fiber length) of fiber length of the PAN-based carbon fibers included in the bearing retainer is 90 µm or more, and
an interquartile range (75% fiber length-25% fiber length) of fiber length of the pitch-based carbon fibers included in the bearing retainer is 40 µm or less.

7. The bearing retainer according to claim 2, wherein a content ratio of the pitch-based carbon fibers to the PAN-based carbon fibers included in the bearing retainer is, in terms of mass ratio, 1:5 to 5:1 (pitch-based carbon fibers:PAN-based carbon fibers).

8. The bearing retainer according to claim 2, wherein the PAN-based carbon fibers and the pitch-based carbon fibers included in the bearing retainer are contained in a total amount of 10 to 35 parts by mass with respect to the bearing retainer (100 parts by mass).

9. The bearing retainer according to claim 1, wherein the resin includes a polyamide-based resin.

10. The bearing retainer according to claim 9, wherein the polyamide-based resin is a semi-aromatic polyamide.

11. The bearing retainer according to claim 9, wherein the polyamide-based resin is polynonamethylene terephthalamide (PA9T) or polyamide 46 (PA46).

12. A rolling bearing comprising the bearing retainer according to any one of claims 1 to 11.

13. A motor comprising the rolling bearing according to claim 12.

14. A dental handpiece comprising the rolling bearing according to claim 12.
